Europäisches Patentamt

European Patent Office

Office européen des brevets

(11) Veröffentlichungsnummer: **0 152 621**
**A1**

(12) # EUROPÄISCHE PATENTANMELDUNG

(21) Anmeldenummer: 84116248.0

(22) Anmeldetag: **22.12.84**

(51) Int. Cl.⁴: **B 23 D 49/16**

(30) Priorität: **04.02.84 DE 3403933**

(43) Veröffentlichungstag der Anmeldung: **28.08.85**
**Patentblatt 85/35**

(84) Benannte Vertragsstaaten: **CH DE FR GB IT LI**

(71) Anmelder: **ROBERT BOSCH GMBH, Postfach 50,**
**D-7000 Stuttgart 1 (DE)**

(72) Erfinder: **Kaiser, Hans., Hauptstrasse 78,**
**CH-3297 Lenzigen (CH)**
Erfinder: **Rhyn, Walter., Höheweg 40,**
**CH-3366 Bollodingen (CH)**
Erfinder: **Ruepp, Urs, Dipl.-Ing., Dürrbachstrasse 53,**
**CH-4500 Solothurn (CH)**
Erfinder: **Schönholzer, Heinz, Aebnitstrasse 224,**
**CH-4571 Lüterkofen (CH)**
Erfinder: **Wolf, Erwin, Rosenhan 6, D-7153 Weissach i.T.**
**(DE)**

(54) **Stichsäge mit Pendelhub.**

(57) Eine Stichsäge (1) mit Pendelhub ist mit einer beim Pendeln mitschwingenden, verbesserten Hubstangendichtung (7), mit einem Abstreifer (11, 18) und einem Hubstangenschloß (4) mit abgeschrägter Oberkante (6) versehen. An der Hubstange (3) der Stichsäge (1) haftender Schmutz kann so leicht abgestreift werden und wird nicht durch das Hubstangenschloß (4) in die Hubstangendichtung (7) bzw. an dieser vorbei gepreßt. Ein Ring (16) aus einem festen Material mit guten Gleiteigenschaften, vorzugsweise Kunststoff, ist an seinen Außenflächen mit einer Vielzahl von Dichtlippen (17) besetzt. Dieser Ring (16) ist eine einfache und damit kostensparend herstellbare Hubstangendichtung, die alle Forderungen nach einer dauerhaften Abdichtung der Hubstange erfüllt. Damit ist die Lebensdauer der Stichsäge entscheidend verlängert.

17.11.1983 Br/Le

ROBERT BOSCH GMBH, 7000 STUTTGART 1


Stichsäge mit Pendelhub

Stand der Technik

Die Erfindung geht aus von einer Stichsäge nach der
Gattung des Hauptanspruchs. Es ist schon eine solche
Stichsäge bekannt geworden, bei der die beim Pendeln
mitschwingende Hubstangendichtung durch Verschmutzung
einem erhöhten Verschleiß unterliegt. Oberhalb des Hubstangenschlosses sich an der Hubstange ansetzender
Schmutz (feine Späne) wird vom Hubstangenschloß in die
Hubstangendichtung gedrückt. Zudem wird die meist
aus ölsaugenden, weichen Medien gebildete Hubstangendichtung relativ schnell ausgeschlagen. In eine Hubstangendichtung aus Filz eindringender Schmutz bewirkt,
daß sich die Dichtung verhärtet und nicht mehr abdichtet. Dies verkürzt die Lebensdauer der gesamten
Stichsäge.

                                                    . . .

- 2 -

Vorteile der Erfindung

Die erfindungsgemäße Stichsäge mit den kennzeichnenden
Merkmalen des Hauptanspruchs hat demgegenüber den Vorteil, das Eindringen von Schmutz in die Hubstangendichtung
und an dieser vorbei in das Getriebegehäuse der Stichsäge zu verhindern. Durch die Neigung der der Hubstangendichtung zugewandten Fläche des Hubstangenschlosses und
den der Hubstangendichtung vorgelagerten Abstreifer kann
der Schmutz von der Hubstange so leicht abgestreift
werden, daß er weder in die Hubstangendichtung eindringt
noch diese überwinden kann.

Durch die in den Unteransprüchen aufgeführten Maßnahmen
sind vorteilhafte Weiterbildungen und Verbesserungen
der im Hauptanspruch angegebenen Stichsäge möglich.
Besonders vorteilhaft ist die Ausbildung der Hubstangendichtung als Ring aus einem festen Material mit guten
Gleiteigenschaften, vorzugsweise Kunststoff, mit Außenflächen, die eine Vielzahl von Dichtlippen haben. Diese
Dichtlippen bilden ein abdichtendes Labyrinth. Der die
Hubstange dicht umschliessende Ring wirkt zugleich als
Abstreifer für den der Hubstange anhaftenden Schmutz.
Dieser Ring ist einfach in seiner Form und deshalb
preiswert herstellbar. Etwas aufwendiger aber gleichfalls die Hubstangendichtung selbst verbessernd, ist
deren Ausbildung als vorzugsweise zweiteiliger Hohlkörper, der ein weichelastisches, ölsaugendes Dichtmittel aufnimmt.

...

Zeichnung

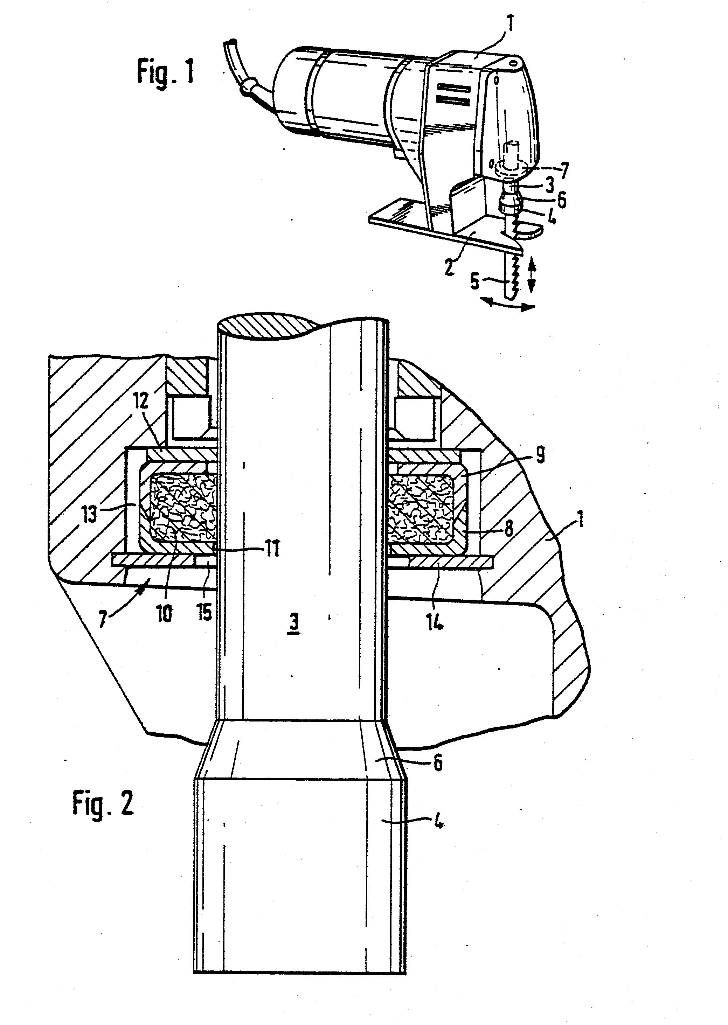

Zwei Ausführungsbeispiele des Erfindungsgegenstandes sind
in der Zeichnung dargestellt und in der nachfolgenden Beschreibung näher erläutert. Es zeigen Figur 1 eine
perspektivische Darstellung einer erfindungsgemäßen Stichsäge mit Pendelhub, mit abgeschrägter Oberkante des Hubstangenschlosses und einer verbesserten Hubstangendichtung,

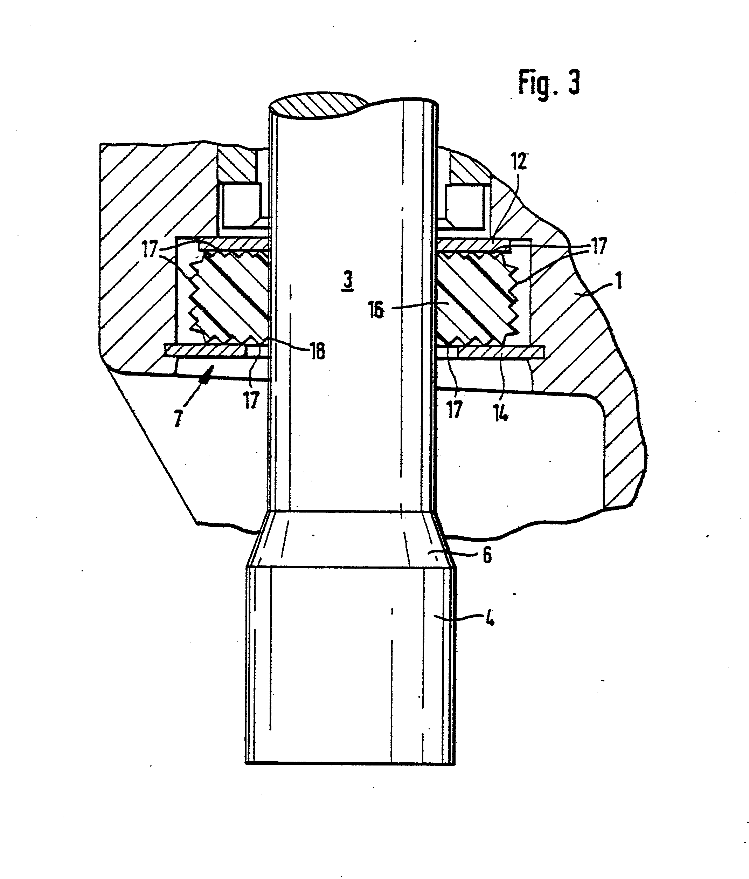

Figur 2 einen Schnitt durch den Teil der Stichsäge im Bereich der Hubstangendichtung nach einem ersten Ausführungsbeispiel und Figur 3 einen Schnitt wie Figur 2 nach einem
zweiten Ausführungsbeispiel.

Beschreibung der Ausführungsbeispiele

In einer Stichsäge 1 mit einer Grundplatte 2 ist eine Hubstange 3 gelagert. Diese Hubstange 3 ist sowohl für hin-
und hergehende Bewegung in Richtung ihrer Längsachse als
auch für eine quer dazu überlagerte Pendelbewegung gelagert. Ein Hubstangenschloß 4 am Ende dieser Hubstange 3
ist zum Festspannen eines Stichsägeblattes 5 ausgebildet.
Die dem Gehäuse der Stichsäge 1 zugewandte, ringförmige
Fläche des Hubstangenschlosses 4 ist gegenüber der Längsachse der Hubstange 3 stark geneigt, so daß auf der Oberfläche der Hubstange 3 abgelagerter Schmutz über diese
Schrägfläche, die mit 6 bezeichnet ist, leicht abgleiten
kann. Dort wo die Hubstange 3 aus dem Gehäuse der Stichsäge 1 hervortritt durchdringt sie eine Hubstangendichtung
7, die sowohl in der Ausführungsform gemäß Figur 2 als auch
in der Ausführungsform gemäß Figur 3 ausgebildet sein kann.

...

In der Ausbildung gemäß Figur 2 ist die Hubstangendichtung 7 als zweiteiliger Hohlkörper 8/9 und von diesem umschlossener Dichtfilz 10 ausgebildet. Die die Hubstange 3 dicht umschließende Kante 11 des Hohlkörperteils 8 dient zugleich als Abstreifer für den auf der Oberfläche der Hubstange 3 haftenden Schmutz. Dieser Schmutz setzt sich meist aus feinen Sägespänen und dem Ölfilm auf der Oberfläche der Hubstange 3 zusammen. Die in der Zeichnung gemäß Figur 2 obere Stirnfläche des Hohlkörpers 8/9 liegt an einer Scheibe 12 an, die ihrerseits durch eine entsprechend Fläche im Gehäuse der Stichsäge 1 gestützt wird. Die Hubstangendichtung 7 wird in einer Ausnehmung 13 des Gehäuses der Stichsäge 1 gehalten, durch eine eingesprengte Stahlscheibe 14. Eine Öffnung 15 in dieser Stahlscheibe 14 läßt der Hubstange 3 genügend Spiel für deren Pendelhub. Die Hubstangendichtung 7 schwingt beim Pendelhub mit und gleitet dabei zwischen der Scheibe 12 und der Stahlscheibe 14.

Im Ausführungsbeispiel gemäß Figur 3 ist die Hubstangendichtung 7 gebildet durch einen Ring 16 aus einem gut gleitenden Kunststoff, dessen Außenflächen mit einer Vielzahl von Dichtlippen 17 versehen sind. Eine Kante 18 dieses Ringes 16 wirkt auch hier als Abstreifer für auf der Mantelfläche der Hubstange 3 haftenden Schmutz. Wie bei der Ausführung nach Figur 2 der Hohlkörper 8/9 mit dem eingeschlossenen Dichtfilz 10, schwingt hier der Ring 16 zwischen der Scheibe 12 und der Stahlscheibe 14 mit der Hubstange 3 mit. Infolge seiner einfachen Form ist der Ring 16 kostengünstig herstellbar.

...

Diese erfindungsgemäße Ausbildung des Hubstangenschlosses 4 und der Hubstangendichtung 7 erhöht die Lebensdauer der Hubstangendichtung 7 und damit der gesamten Stichsäge erheblich.

R. 19193

17.11.1983 Br/Le

ROBERT BOSCH GMBH, 7000 STUTTGART 1

Ansprüche

1. Stichsäge mit Pendelhub, mit einer den Getrieberaum zum Werkzeug hin abdichtenden, der Pendelbewegung der Hubstange in einer Führung folgenden Hubstangendichtung und einem Hubstangenschloß, das einen größeren Querschnitt hat als die Hubstange, dadurch gekennzeichnet, daß die der Hubstangendichtung (7) zugewandte Fläche (6) des Hubstangenschlosses (4) gegen die Längsachse der Hubstange (3) geneigt und die Hubstangendichtung (7) gegen das Eindringen von Schmutz in das Dichtmittel (10, 16) durch einen die Hubstange (3) umschließenden Abstreifer (11, 18) gesichert ist.

2. Stichsäge nach Anspruch 1, dadurch gekennzeichnet, daß zwischen der Hubstangendichtung (7) und dem Hubstangenschloß (4) eine Kunststoffplatte als Abstreifer eingesetzt ist.

3. Stichsäge nach Anspruch 1, dadurch gekennzeichnet, daß die Hubstangendichtung (7) aus einem Hohlkörper (8/9) und einem von diesem aufgenommenen Dichtmittel (10) besteht und die dem Hubstangenschloß (4) zugewandte Wand des Hohlkörpers (8, 9) als Abstreifer (11) ausgebildet ist.

...

4. Stichsäge nach Anspruch 1, dadurch gekennzeichnet, daß die Hubstangendichtung (7) ein die Hubstange (3) dichtend umschließender Ring (16) aus einem festen Material mit guten Gleiteigenschaften, vorzugsweise aus Kunststoff, ist, dessen Außenflächen eine Vielzahl von Dichtlippen (17) haben, die ein Labyrinth bilden, und der selbst als Abstreifer (18) wirkt.

5. Stichsäge nach Anspruch 3, dadurch gekennzeichnet, daß der Hohlkörper aus zwei Schalen (8, 9) zusammengesetzt ist.

6. Stichsäge nach Anspruch 3, dadurch gekennzeichnet, daß das Dichtmittel (10) aus einem ölsaugenden Medium, vorzugsweise Filz hergestellt ist.

7. Stichsäge nach Anspruch 1, dadurch gekennzeichnet, daß der Abstreifer (8/11, 16/18) aus wärmebeständigen Material hergestellt ist.

Fig. 1

Fig. 2

Fig. 3

**EUROPÄISCHER RECHERCHENBERICHT**

0152621
Nummer der Anmeldung

EP 84 11 6248

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE-A-3 203 733 (K.M. REICH MASCHINENFABRIK GMBH) * Ansprüche 1,2; Seite 4, letzter Absatz - Seite 5, Zeile 5; Figuren 1-3 * | 1 | B 23 D 49/16 |
| A | | 3,5,6 | |
| Y | US-A-2 931 402 (PAPWORTH) * Figur 1 * | 1 | |
| A | DE-U-8 137 904 (KRESS-ELEKTRIK GMBH & CO.) * Seite 8, Zeile 24 - Seite 9, Zeile 8; Figur 1 * | 1 | |
| A | US-A-4 238 884 (WALTON) * Spalte 4, Zeilen 1-4; Figur 1 * | 1 | RECHERCHIERTE SACHGEBIETE (Int. Cl.4)  B 23 D 49/00 B 27 B 19/00 |

Der vorliegende Recherchenbericht wurde für alle Patentansprüche erstellt.

| Recherchenort | Abschlußdatum der Recherche | Prüfer |
|---|---|---|
| BERLIN | 29-04-1985 | MARTIN A E W |